# EUROPÄISCHE PATENTANMELDUNG

(11) **EP 1 376 340 A2**
(43) Veröffentlichungstag der Anmeldung: **02.01.2004**
(21) Anmeldenummer: 03007250.8
(22) Anmeldetag: 31.03.2003
(51) Int. Cl.: G06F 9/445

(54) **Elektronisches prozessorgesteuertes Gerätesystem**

(30) Priorität: 19.06.2002 DE 10227288
(71) Anmelder: ROBERT BOSCH GMBH, 70442 Stuttgart (DE)
(72) Erfinder: Hinrichs, Andreas, 31199 Diekholzen (DE); Mann Pelz, Rodolfo, 30175 Hannover (DE)

(57) **Zusammenfassung**

Bei einem elektronischen prozessorgesteuerten Gerätesystem (1) mit Verwaltungsmitteln (4) für Konfigurationsdaten für an das Gerätesystem (1) angeschlossene elektronische Geräte und/oder Anwendungsprogramme (3) werden die Konfigurationsdaten unabhängig von dem jeweiligen Gerät oder Anwendungsprogramm (3) abgespeichert und verwaltet. Die Verwaltungsmittel (4) haben eine Schnittstelle zum Umsetzen der gespeicherten Konfigurationsdaten auf die Kommunikationsebene von Geräten und Anwendungsprogrammen (3), um die Konfigurationsdaten auf einem ausgewählten Gerät oder Anwendungsprogramm zu aktivieren.

## Beschreibung

Die Erfindung betrifft ein elektronisches prozessorgesteuertes Gerätesystem mit Verwaltungsmitteln für Konfigurationsdaten für an das Gerätesystem angeschlossene elektronische Geräte oder Anwendungsprogramme.

Elektronische Geräte oder Anwendungsprogramme werden in der Regel bei der Installation oder während des Betriebs konfiguriert. Die Verwaltung der Konfigurationsdaten erfolgt dabei individuell über die Geräte oder Anwendungsprogramme, wobei die Konfigurationsdaten bei komplexen Gerätesystemen separat für jedes Anwendungsprogramm und Gerät abgespeichert und verwaltet werden.

Bei Computersystemen werden beispielsweise Benutzerprofile in Betriebssystemen abgespeichert, die nach dem Einloggen eines Nutzers spezifisch für den Benutzer geladen werden. In solchen Benutzerprofilen sind beispielsweise Desktopeinstellungen, wie Hintergrundbild, Schriftart, Icons etc. des jeweiligen Benutzers abgespeichert.

Weiterhin bietet fast jedes Anwendungsprogramm Einstellungsmöglichkeiten zum Festlegen von Optionen oder Anwendungsparametern. Derartige Einstellungen können benutzerabhängig oder benutzerunabhängig sein. Das Format, in dem die Konfigurationsdaten abgespeichert werden sowie die Art und Weise des Austauschs und der Synchronisation der Konfigurationsdaten zwischen einzelnen Anwendungsprogrammen oder Geräten ist hierbei proprietär. Auf Konfigurationsdaten kann zudem nur zugegriffen werden, wenn die entsprechende Anwendung aktiv ist.

Unter Konfigurationsdaten in Form von Profilen wird im Folgenden zwischen den drei verschiedenen Profilarten unterschieden:
a) Benutzerprofil:
   Hierunter sind Benutzerdaten zu verstehen, die die Vorlieben, Prioritäten oder andere benutzerspezifische Daten in Bezug auf Anwendungen, Dienste etc. beinhalten.
b) Geräteprofil:
   Hierunter sind Konfigurationsdaten zu verstehen, die die Fähigkeiten und Eigenschaften eines Gerätes beschreiben. Ein standardisiertes Format für Geräteprofile wurde als sogenanntes Composity Capability/Preference Profile Framework CC/PP von dem World Wide Web Consortium (W3C) spezifiziert. Dieses standardisierte Format ist eine Sprache, mit der sich die Fähigkeiten und Vorlieben beliebiger in einem Gerätenetzwerk angeschlossener Clients in einem Server beschreiben lassen. In einer Kurzbeschreibung wird von einem Client dem Server mitgeteilt, über welche Funktion der Client verfügt, wie z. B. farbige Bilder darstellen, Töne abspielen, Tastatureingaben verarbeiten etc. Zudem werden durch das standardisierte Format CC/PP proprietäre Geräteprofile unterstützt.
c) Inhaltsprofil:
   Diese Konfigurationsdaten beschreiben den Inhalt beispielsweise von Datenträgern, wie z. B. CD, DVD, Video, sowohl bezüglich der technischen Merkmalen, wie Codierformat, Größe der Dateien etc., als auch bezüglich des Inhaltes (Interpret, Titel etc.).

Aufgabe der Erfindung war es nunmehr, ein verbessertes elektronisches prozessorgesteuertes Gerätesystem mit Verwaltungsmitteln für Konfigurationsdaten für an das Gerätesystem angeschlossene elektronische Geräte oder Anwendungsprogramme zu schaffen, mit dem die Konfigurationsdaten und damit die Profile anwendungs- und geräteunabhängig verwaltet und bereitgestellt werden können.

Die Aufgabe wird mit dem gattungsgemäßen elektronischen prozessorgesteuerten Gerätesystem erfindungsgemäß dadurch gelöst, dass die Konfigurationsdaten unabhängig von dem jeweiligen Gerät oder Anwendungsprogramm abgespeichert und verwaltet werden und die Verwaltungsmittel eine Schnittstelle zum Umsetzen der gespeicherten Konfigurationsdaten auf die Kommunikationsebene von Geräten und/oder Anwendungsprogrammen haben, um die Konfigurationsdaten auf einem ausgewählten Gerät oder Anwendungsprogramm zu aktivieren.

Es wird somit vorgeschlagen, die Konfigurationsdaten separat in einem Datenformat zu verwalten, das unabhängig von den Geräten und Anwendungsprogrammen ist. Stattdessen wird eine Kommunikationsschnittstelle für die Geräte und Anwendungsprogramme bereitgestellt, so dass diese sich die Konfigurationsdaten bei Bedarf von den Verwaltungsmitteln abrufen können.

Dies hat den Vorteil, dass die Konfigurationsdaten zentral verwaltet und beispielsweise von Diensteanbietern bereitgestellt werden können. Die Konfigurationsdaten werden zudem von der Anwendung bzw. dem Gerät getrennt verwaltet und abgespeichert, so dass die abgespeicherten Profile bei Austausch eines Geräts oder Anwendungsprogramms nicht verloren gehen.

Als Konfigurationsdaten werden beispielsweise nutzerabhängige Benutzerprofile zur Einstellungen von Geräten, Vorrichtungen oder Anwendungsprogrammen, Geräteprofile zur Festlegung von Funktionen und Eigenschaften von Geräten und Vorrichtungen und/oder Inhaltsprofile zur Beschreibung des Inhaltes von Datenträgern verwaltet und abgespeichert.

Die Erfindung wird nachfolgend anhand der beigefügten Zeichnungen näher erläutert. Es zeigt:

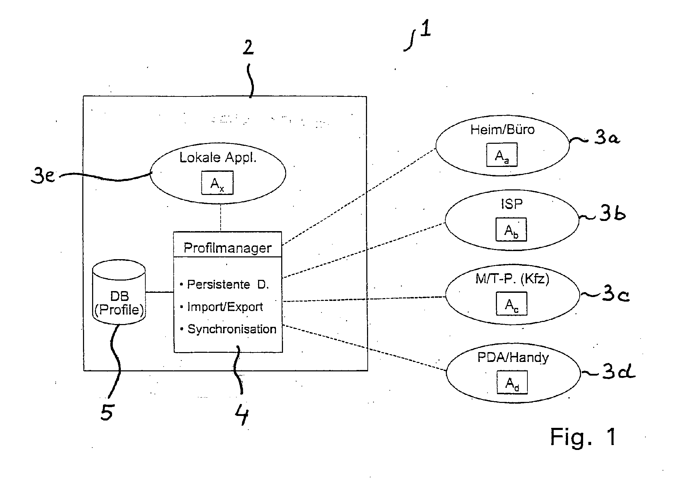

- Figur 1 -: Blockdiagramm eines elektronischen prozessorgesteuerten Gerätesystems mit zentralen Verwaltungsmitteln zur Verwaltung und Abspeicherung von Konfigurationsdaten.

Die Figur 1 lässt ein elektronisches prozessorgesteuertes Gerätesystem 1 mit einer Zentraleinheit 2 und einer Vielzahl von an die Zentraleinheit 2 angeschlossenen externen Geräten bzw. Anwendungsprogrammen 3a bis 3d erkennen. Zudem kann auf der Zentraleinheit 2 ein lokales Anwendungsprogramm 3e aktiviert sein.

Die Zentraleinheit 2 verfügt über Verwaltungsmittel 4, beispielsweise in Form einer geeigneten Software, sowie über einen Speicher 5. Die Verwaltungsmittel 4 dienen dazu, Konfigurationsdaten zentral auf dem Speicher 5 der Zentraleinheit 2 abzulegen und zu verwalten. Damit ist ein Zugriff auf die Konfigurationsdaten unabhängig von den angeschlossenen Geräten und/oder Anwendungsprogrammen 3 möglich.

Die Verwaltungsmittel 4 haben eine Schnittstelle, um die Konfigurationsdaten auf die Geräte bzw. Anwendungsprogramme 3 zu übertragen. Die Konfigurationsdaten werden hierzu vorzugsweise in dem Datenformat "Extensible Markup Language" XML abgelegt, das plattformunabhängig und neutral gegenüber anderen Programmiersprachen ist. Mit Hilfe einer "Document Type Definition" DTD oder eines XML-Schemas besteht die Möglichkeit, die Struktur eines Dokumentes im XML-Datenformat vorzugeben sowie weitere Einschränkungen zum Inhalt und Format der Konfigurationsdaten anzugeben.

Die lokal in der Zentraleinheit 2 integrierten Geräte oder Anwendungsprogramme 3e sowie extern an das Gerätesystem 1 angeschlossene Geräte oder Anwendungsprogramme 3a bis 3d greifen auf die Verwaltungsmittel 4 zu und erhalten von dort über geeignete Schnittstellen die abgespeicherten Konfigurationsdaten (Export von Profilen).

Weiterhin greifen die Geräte bzw. Anwendungsprogramme 3 auf die Verwaltungsmittel 4 zu und speichern entsprechende Konfigurationsdaten ab (Import von Profilen).

Zusätzlich greifen die Geräte und/oder Anwendungsprogramme 3 auf die Verwaltungsmittel 4 zu, um eigene Konfigurationsdaten mit den im Speicher der Zentraleinheit 2 vorhandenen Konfigurationsdaten abzugleichen (Synchronisation von Profilen).

Beim Zugriff auf die Konfigurationsdaten kann nach Benutzern bzw. Benutzergruppen unterschieden werden, so dass beispielsweise bestimmte Konfigurationsdaten nur von Geräteherstellern selbst ausgelesen oder verändert werden können. Andere Konfigurationsdaten, wie beispielsweise ein persönliches Adressbuch, können nur von dem jeweiligen Benutzer des Gerätes oder Anwendungsprogramme 3 geändert oder eingestellt werden.

Als Geräte oder Anwendungsprogramme 3 können beispielsweise Heimcomputer oder Bürocomputergeräte 3a, Internet-Serviceprovider-Plattformen oder Server (ISP) 3b, Vorrichtungen und Geräte in Kraftfahrzeugen 3c, wie z. B. Muitimedia-/Teiematikgeräte M/T-P, Personaldatenassistenten (Personal Data Assistent - PDA) oder Handys 3d etc. sein.

Die Verwaltungsmittel 4 können hierbei auf Personalcomputern oder persönlichen Datenassistenten PDA's etc. eingesetzt und als zentrale Komponente zur Verwaltung und Austausch der Konfigurationsdaten genutzt werden.

Bei dem Einsatz in Kraftfahrzeugen können als Konfigurationsdaten beispielsweise Benutzerprofile abgelegt werden, wie beispielsweise benutzerabhängige Einstellungen von Fahrzeugsitzen, Klimaanlage, Spiegel, Radio, Telefon, Navigationssystem, ortabhängige Dienste, Sprachausgabe, fahrerunterstützende Systeme, wie z. B. Verkehrszeichenerkennung, Warnhinweise etc. Weiterhin können Diensteanbieter eingestellt werden sowie Adressbücher, Terminkalender, Notizen etc. benutzerabhängig als Benutzerprofile abgelegt werden.

Konfigurationsdaten in Form von Geräteprofilen bei dem Einsatz in Fahrzeugen können beispielsweise die Beschreibung des Kraftfahrzeuges sein, um Werkstätten eine genauere Ferndiagnose zu ermöglichen. Hierzu können Hersteller, Modell, Motornummer, Ausstattung, Version der Motorsteuerungssoftware etc. sowie Wartungsintervalle, Wartungs- und Reparaturarbeiten, Vorbesitzer, Untersuchungsberichte, Lebenslauf des Kraftfahrzeuges etc. abgespeichert werden.

Als Konfigurationsdaten in Form von Inhaltsprofilen bei Kraftfahrzeugen können beispielsweise zusätzlich installierte Geräte, wie Radio, Navigation, Telefon, persönliche Datenassistenten (PDA), Bildschirm etc. beschrieben werden.

## Patentansprüche

1. Elektronisches prozessorgesteuertes Gerätesystem (1) mit Verwaltungsmitteln (4) für Konfigurationsdaten für an das Gerätesystem (1) angeschlossene elektronische Geräte und/oder Anwendungsprogramme (3), **dadurch gekennzeichnet, dass** die Konfigurationsdaten unabhängig von dem jeweiligen Gerät oder Anwendungsprogramm (3) abgespeichert und verwaltet werden und die Verwaltungsmittel (4) eine Schnittstelle zum Umsetzen der gespeicherten Konfigurationsdaten auf die Kommunikationsebene von Geräten und Anwendungsprogrammen (3) haben, um die Konfiguration auf einem ausgewählten Gerät oder Anwendungsprogramm (3) zu aktivieren.

2. Elektronisches Gerätesystem (1) nach Anspruch 1, **dadurch gekennzeichnet, dass** die Verwaltungsmittel (4) zentral für alle an das Gerätesystem (1) angeschlossenen Geräte und/oder Anwendungsprogramme (3) verfügbar sind.

3. Elektronisches Gerätesystem (1) nach Anspruch 1 oder 2, **dadurch gekennzeichnet, dass** die Konfigurationsdaten nutzerabhängige Benutzerprofile zur Einstellung von Geräten, Vorrichtungen oder Anwendungsprogrammen (3) sind.

4. Elektronisches Gerätesystem (1) nach einem der vorhergehenden Ansprüche, **dadurch gekennzeichnet, dass** die Konfigurationsdaten Geräteprofile zur Festlegung von Funktionen und Eigenschaften von Geräten (3) und Vorrichtungen sind.

5. Elektronisches Gerätesystem (1) nach einem der vorhergehenden Ansprüche, **dadurch gekennzeichnet, dass** die Konfigurationsdaten Inhaltsprofile zur Beschreibung des Inhaltes von Datenträgern sind.
